# FASCICULE DE BREVET EUROPEEN

(11) **EP 2 927 547 B1**
(45) Date de publication et mention de la délivrance du brevet: **06.09.2017**
(21) Numéro de dépôt: 15156417.6
(22) Date de dépôt: 24.02.2015
(51) Int. Cl.: F16K 3/02, F16K 31/06, B07C 5/36

(54) **ELECTROVANNE MINIATURE RAPIDE**
MINI-SCHNELLVERSCHLUSS-MAGNETVENTIL
QUICK MINIATURE SOLENOID VALVE

(30) Priorité: 02.04.2014 FR 1452918
(43) Date de publication de la demande: 07.10.2015
(73) Titulaire: ASCO SAS, 28110 Lucé (FR); Institut National des Sciences Appliquées de Lyon, 69100 Villeurbanne (FR); Université Claude Bernard Lyon 1, 69100 Villeurbanne (FR); Ecole Centrale de Lyon, 69130 Ecully (FR); CENTRE NATIONAL DE LA RECHERCHE SCIENTIFIQUE, 75794 Paris Cedex 16 (FR)
(72) Inventeur: Sesmat, Sylvie, 69490 PONTCHARRA SUR TURDINE (FR); Sixdenier, Fabien, 69100 VILLEURBANNE (FR); Caetano-Ferreira, Thiago, 69006 LYON (FR); Bideaux, Eric, 01600 TREVOUX (FR); Vandamme, Richard, 28300 LEVES (FR); Moreau, Pascal, 28630 LE COUDRAY (FR)
(74) Mandataire: Nony

(56) Documents cités:
- CN-U- 203 348 581
- DE-A1- 4 314 581
- GB-A- 2 445 773
- US-A- 5 349 986
- US-A1- 2008 173 836
- US-A1- 2010 247 359

## Description

La présente invention concerne une électrovanne, et plus particulièrement mais non exclusivement une électrovanne pour la commutation d'air comprimé.

Dans certaines applications, par exemple dans le domaine du tri, il est nécessaire de disposer d'électrovannes rapides présentant une haute densité d'énergie dans un encombrement limité. L'électrovanne doit être à commutation rapide, avec une largeur réduite et un débit élevé.

Les solutions classiques à clapet, dans cet encombrement réduit, ne permettent pas d'obtenir une commutation rapide et un débit élevé avec une puissance de commande modérée. En effet, pour obtenir un débit élevé, la course du clapet doit être importante, ce qui nécessite une puissance élevée lorsque l'on souhaite obtenir une commutation rapide. Dans ce cas, la durée de vie de l'électrovanne est impactée par la vitesse élevée de déplacement de l'obturateur.

Généralement, la technologie des électrovannes rapides miniatures repose sur l'utilisation d'un clapet directement actionné par un électroaimant. Cette technologie permet d'atteindre des temps de réponse réduits. Cependant, les performances en termes de débit restent limitées car elles sont liées à la section de passage et à la course, elles-mêmes liées à la puissance fournie par l'actionneur électromagnétique. De plus, le temps de réponse de l'électrovanne est fortement dépendant de la pression d'utilisation.

Dans certaines électrovannes, la section de passage d'air du clapet est volontairement élevée afin de permettre une très faible course, pour un débit similaire et une vitesse de commutation élevée. Toutefois, dans ce cas, la dépendance à la pression est beaucoup plus élevée et il est nécessaire d'augmenter la puissance de l'actionneur électromagnétique. De plus, une très faible course impose une maîtrise des tolérances de fabrication des pièces, ce qui peut impacter fortement le coût du produit.

Une variante de cette technologie est le clapet équilibré en pression. Cela permet de réduire la dépendance du temps de réponse à la pression d'utilisation. Néanmoins, le débit n'est pas amélioré.

US2008/0173836 A1 divulgue une électrovanne de sécurité à grille, de faible coût, destinée à une installation de gaz domestique. Une telle électrovanne n'est pas prévue pour un fonctionnement à fréquence élevée. Chaque fente peut faire 1 mm de large.

GB 2445773 3 divulgue un actuateur électromagnétique à matériau magnétique à mémoire de forme.

DE4314581 A1 divulgue une électrovanne à grille visant à obtenir une étanchéité élevée tout en étant à faible consommation énergétique. La grille est déplacée par un actionneur à aimants permanents et électroaimants.

CN 203348581 U décrit une électrovanne à grille.

L'invention vise à perfectionner encore les électrovannes afin de permettre une commutation rapide et un débit élevé, sous un encombrement et une puissance limités.

L'invention a ainsi pour objet une électrovanne ayant une entrée et une sortie de fluide, notamment d'air comprimé, selon la revendication 1, comportant:
- un actionneur,
- un obturateur entraîné par l'actionneur, mobile entre une position fermée s'opposant à un passage du fluide entre l'entrée et la sortie, et une position ouverte permettant le passage du fluide entre l'entrée et la sortie, l'obturateur présentant au moins un orifice et se déplaçant au contact d'un siège présentant au moins un orifice correspondant, ce dernier se superposant au moins partiellement à l'orifice de l'obturateur quand celui-ci est en position ouverte et le siège obturant l'orifice de l'obturateur quand celui-ci est en position fermée.

L'invention permet d'obtenir, notamment en multipliant le nombre d'orifices, une section de passage élevée, donc un débit élevé, pour une course réduite de l'obturateur.

L'invention peut permettre de commuter le débit de fluide à une fréquence relativement élevée, de préférence supérieure ou égale à 100 Hz, mieux supérieure ou égale à 500 Hz.

La fréquence de commutation peut être fixe ou variable. En jouant sur la fréquence de commutation, voire sur le rapport cyclique d'ouverture, il est possible de régler le débit.

La largeur *w* d'une fente fait de préférence moins de 1 mm, mieux moins de 0,5 mm, de préférence entre 0,1 et 0,3 mm.

L'écartement *s* entre deux fentes consécutives peut être compris entre 0,2 et 0,8mm, mieux entre 0,4 et 0,6 mm. On a de préférence *s* ≥ 2 *w*.

De préférence, le ou les orifices de l'obturateur et du siège se présentent sous la forme de fentes, lesquelles sont de préférence disposées parallèlement les unes aux autres, et sont préférentiellement orientées perpendiculairement à la direction de déplacement de l'obturateur. L'obturateur présente par exemple entre 4 et 9 fentes.

L'obturateur et le siège sont de préférence constitués par deux plaques comportant chacune des fentes. Ces deux plaques coulissent l'une sur l'autre de manière à laisser passer ou obturer le flux de fluide, en fonction de leur position relative.

Par ailleurs, le temps de réponse est peu dépendant de la pression d'utilisation et le débit est favorisé par la possibilité de placer l'obturateur directement dans la veine de fluide.

De plus, la faible course de l'obturateur entre les positions ouverte et fermée permet d'utiliser un actionneur de puissance modérée. Cette faible course permet également de limiter les vitesses de déplacement de l'obturateur et donc les chocs, favorisant ainsi la durée de vie de l'électrovanne. La course de l'obturateur entre les positions ouverte et fermée est inférieure à 1 mm, mieux inférieure ou égale à 0,75 mm, encore mieux inférieure ou égale à 0,5 mm.

Afin de limiter les frottements et d'augmenter la durée de vie, au moins l'un du siège et de l'obturateur est réalisé préférentiellement en matériau céramique. De préférence, à la fois l'obturateur et le siège sont en matériau céramique. Pour des raisons économiques, le siège et l'obturateur peuvent être réalisés dans d'autres matériaux, avec éventuellement certaines des performances dégradées.

L'actionneur peut être à noyau mobile tirant ou poussant.

L'actionneur peut comporter un élément moteur constitué par un matériau à mémoire de forme magnétique, notamment sous forme de barreau s'allongeant lorsque traversé par un champ magnétique. Cela permet d'améliorer encore le temps de réponse et la durée de vie du produit.

L'électrovanne peut comporter deux actionneurs en opposition, notamment deux actionneurs comportant chacun un élément moteur constitué par un matériau à mémoire de forme magnétique. Cela permet de réduire la consommation électrique.

L'entrée et la sortie peuvent être définies par des orifices débouchant sur une même face de l'électrovanne. Cela peut faciliter le montage de plusieurs électrovannes dans un plan de pose.

Les orifices d'entrée et de sortie peuvent être équipés de joints respectifs.

La largeur de l'électrovanne peut être inférieure ou égale à 15 mm.

Le siège peut être monté, avec interposition d'un joint, contre un insert rapporté dans un corps, notamment maintenu par des vis sur celui-ci. Le corps est parcouru par un canal interne communiquant avec une entrée de fluide. Ce canal interne est obturé par un capot inférieur ou en variante, communique avec un canal réalisé dans une embase, et débouchant sur une entrée de fluide.

L'électrovanne peut comporter un ressort de rappel de l'obturateur, disposé entre le capot inférieur et le corps.

L'invention a encore pour objet l'utilisation de l'électrovanne selon l'invention pour commuter un flux d'air comprimé.

Lorsque l'électrovanne comporte deux actionneurs en opposition, comportant chacun un élément moteur constitué par un matériau à mémoire de forme magnétique, ceux-ci peuvent être alimentés par un courant variable, de façon à piloter l'obturateur en mode proportionnel.

Le matériau à mémoire de forme magnétique est de préférence un alliage NiMnGa, avec une structure tétragonale martensitique, et une anisotropie du métal magnétique.

Le débit nominal de l'électrovanne est par exemple compris entre 100 et 400 l/min ANR (Atmosphère Normale de Référence) pour une pression d'air de 7 bars.

Le débit de fuite est de préférence non nul mais inférieur à 5% du débit nominal. Ce débit de fluide peut être utile pour réaliser une fonction de purge.

Le matériau à mémoire de forme magnétique est par exemple sous la forme d'un barreau dont la section transversale est supérieure ou égale à 2.5 mm².

L'invention a encore pour objet un procédé pour générer un flux de fluide pulsé en utilisant une électrovanne selon l'invention, actionnée à une fréquence supérieure ou égale à 100 Hz, mieux supérieure ou égale à 500 Hz, notamment comprise entre 0 et 1500 Hz.

La fréquence peut être variable et choisie en fonction du débit souhaité ; en variante, la fréquence est fixe et l'on agit sur le rapport cyclique.

Le fluide commuté est avantageusement de l'air.

L'invention pourra être mieux comprise à la lecture de la description détaillée qui va suivre, d'exemples de mise en oeuvre non limitatifs de celle-ci, et à l'examen du dessin annexé, sur lequel :
- la figure 1 est une coupe axiale d'une électrovanne selon un premier exemple de mise en oeuvre de l'invention,
- la figure 2 est une coupe de l'électrovanne de la figure 1 dans un plan parallèle au plan d'interface entre le siège et l'obturateur mobile,
- les figures 3 à 7 sont des vues analogues à la figure 1, de variantes de réalisation,
- la figure 8 illustre un exemple de géométrie de fentes, et
- la figure 9 illustre une variante d'obturation à fentes radiales.

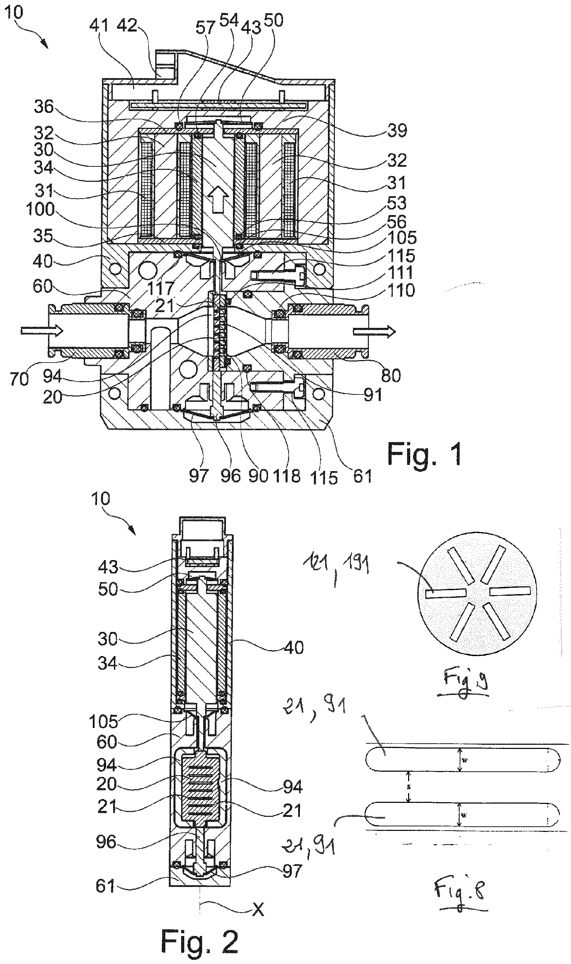

On a représenté aux figures 1 et 2 une électrovanne 10 comportant un obturateur 20 entraîné en déplacement par un noyau mobile 30 d'un actionneur électromagnétique, comportant au moins une bobine 31 montée sur une culasse magnétique 32.

Dans l'exemple considéré, l'actionneur comporte deux bobines 31 disposées chacune autour d'une culasse 32. Le noyau 30 peut être guidé dans son déplacement par une entretoise 34 ou par l'action conjointe des ressorts plats 50 et 105.

Les flux magnétiques circulant dans les culasses 32 rebouclent par l'intermédiaire de plaques inférieure 35 et supérieure 36.

Les bobines 31, les culasses 32 et les plaques 35,36 sont logées dans un boîtier 40 et centrées dans celui-ci par l'intermédiaire d'une pièce de centrage 39.

Le boitier 40 comporte un capot supérieur 41 portant un connecteur électrique 42 relié à un circuit électronique 43 auquel les bobines 31 se raccordent. Cette liaison peut être réalisée par des fils électriques, non représentés.

Le noyau 30 vient en appui, à son extrémité supérieure, contre un ressort de rappel supérieur 50, constitué dans l'exemple illustré par un ressort plat.

Des joints toriques 53,54 sont portés par l'entretoise 34 à ses extrémités et viennent en appui respectivement sur les plaques 35 et 36. Des joints toriques 56,57 s'interposent respectivement entre les plaques 35,36 d'une part, et le corps du boitier 40 et la pièce de centrage 39 d'autre part.

Le boîtier 40 est fixé sur un corps pneumatique 60 qui reçoit un raccord d'alimentation en air comprimé 70 et un raccord de sortie 80, ces raccords étant par exemple des raccords rapides. L'obturateur 20 se déplace dans une chambre qui est reliée aux entrée et sortie en air comprimé.

Dans l'exemple illustré, l'obturateur 20 se présente sous la forme d'une plaque en céramique traversée par des fentes 21, visibles à la figure 2, parallèles les unes aux autres et perpendiculaires à la direction X de déplacement de l'obturateur 20.

L'obturateur 20 se déplace au contact d'un siège 90 constitué par une plaque fixe en céramique, traversée par des fentes 91 qui se superposent aux fentes 21 quand l'obturateur 20 est en position ouverte. Les fentes 91 sont parallèles entre elles et orientées perpendiculairement à la direction de déplacement X. Quand l'obturateur 20 est en position fermée, la plaque de siège 90 obture les fentes 21 et l'air ne peut traverser l'électrovanne entre l'entrée 70 et la sortie 80.

Une pièce de support 94 s'étend de part et d'autre des plaques d'obturateur et de siège, comme visible sur la figure 2, pour positionner celles-ci latéralement.

L'obturateur 20 est en appui inférieurement sur un poussoir inférieur 96 qui lui-même appuie contre un ressort inférieur 97, lequel est de préférence, comme illustré, un ressort plat.

Le noyau 30 présente, sur sa portion qui relie le corps engagé dans l'entretoise 34 et l'obturateur 20, un épaulement 100 qui prend appui contre un ressort intermédiaire 105, lequel est, de préférence, comme illustré, un ressort plat. Ce dernier sollicite le noyau en déplacement vers le haut, de même que le ressort inférieur 97.

Le corps pneumatique 60 est fermé par un capot inférieur 61.

Le raccord de sortie 80 est porté par un insert 110 contre lequel s'applique la plaque de siège 90, avec interposition d'un joint 111. L'insert 110 est par exemple, comme illustré, maintenu dans le corps pneumatique 60 par des vis 115.

Un joint torique 117 assure l'étanchéité entre le corps 60 et le boîtier 40, autour du ressort intermédiaire 105. L'insert 110 porte un joint torique 118 qui assure son montage étanche dans le corps 60.

Dans l'exemple des figures 1 et 2, l'actionneur est de type "tirant", c'est-à-dire que le noyau 30 est attiré vers le haut quand les bobines 31 sont excitées électriquement. L'obturateur 20 passe d'une position basse fermée, quand les bobines 31 sont non alimentées, à une position haute ouverte, quand les bobines 31 sont alimentées.

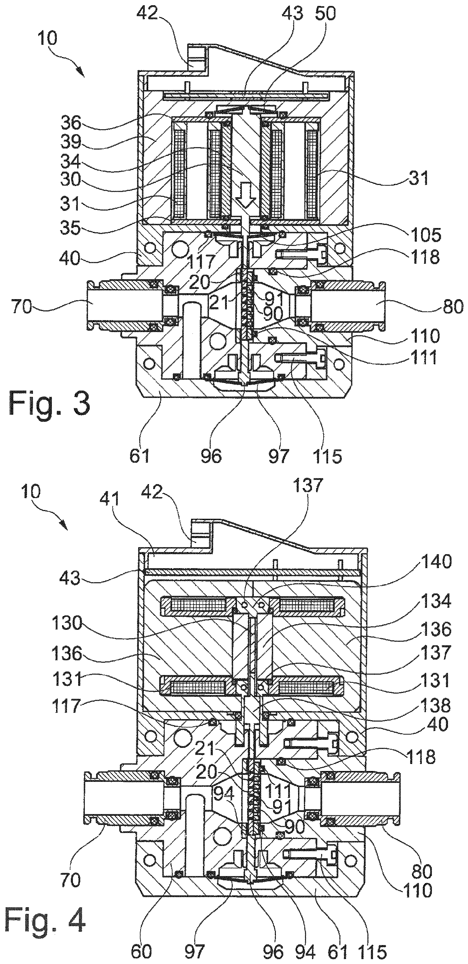

Pour réduire la puissance nécessaire, notamment dans le cas de l'utilisation de plaques à fentes pour l'obturateur et le siège, il peut être avantageux d'utiliser un actionneur électromagnétique de type "poussant", tel qu'illustré à la figure 3.

Dans ce cas, lorsque les bobines 31 sont excitées, le poussoir 96 comprime le ressort inférieur 97. Le ressort intermédiaire 105 est comprimé par le noyau 30. L'obturateur 20 peut passer d'une position haute fermée, lorsque les bobines 31 sont non excitées, à une position basse ouverte, lorsque les bobines 31 sont alimentées.

En comparaison avec le système tirant, l'effort de rappel nécessaire est plus faible sur un système poussant. En effet, l'effort de rappel sur un système tirant résulte de l'effort cumulé de deux ressorts en opposition. Les variations d'efforts liées aux tolérances de fabrication sont alors cumulées. L'actionneur électromagnétique doit alors être surdimensionné pour prendre en compte ces variations.

Cependant, sur un système poussant, le nombre de maillons de la chaîne de cotes axiale est plus important que sur le système tirant, ce qui peut impacter la course et donc les performances.

Dans le but de favoriser le temps de réponse de l'appareil, il est souhaitable de réduire la masse des pièces en mouvement. Pour cela, il peut être avantageux d'utiliser un actionneur électromagnétique utilisant un élément moteur réalisé en matériau à mémoire de forme magnétique.

La figure 4 représente une électrovanne 10 équipée d'un obturateur 20 à plaque à fentes tel que décrit précédemment et d'un actionneur électromagnétique à élément moteur en matériau à mémoire de forme magnétique.

L'actionneur comporte dans l'exemple de la figure 4 un barreau à mémoire de forme 130 disposé entre deux entretoises magnétiques 134, entre lesquelles peut circuler un champ magnétique. Le matériau du barreau à mémoire de forme est par exemple un alliage monocristallin de Nickel (Ni), Manganèse (Mn) et Galium (Ga). Il peut être commercialisé par les sociétés ADAPTAMAT, ETO ou GOODFELLOW.

Deux étriers magnétiques 136 portent chacun une bobine 131. Les étriers 136 sont disposés en vis-à-vis de façon à reboucler le flux magnétique généré par les deux bobines 131, et qui circule entre les entretoises 134 à travers le barreau 130. Un support 140 permet de bloquer le barreau 130 à son extrémité supérieure. Des goupilles 137 viennent solidariser les deux bobines 131 entre elles par l'intermédiaire de la pièce 140, tout en assurant une étanchéité par compression des deux joints 133.

Un poussoir supérieur 138 permet de transmettre l'allongement du barreau 130 à l'obturateur 20. Ce poussoir 138 se déplace dans la partie basse de la pièce 140.

L'obturateur 20 est déplacé vers le bas lors de l'allongement du barreau 130 sous l'effet du champ magnétique d'excitation généré par les bobines 131.

Lorsque les bobines 131 sont non alimentées, l'obturateur est en position haute sous l'effet de rappel du ressort 97 et les fentes 21 sont fermées par la plaque de siège 90.

Lorsque les bobines 131 sont alimentées, le barreau 130 s'allonge et l'obturateur 20 est poussé vers le bas jusqu'à sa position ouverte, où les fentes de l'obturateur 20 se superposent à celles du siège.

Dans les exemples des figures 1 à 4, le retour en position fermée de l'obturateur 20 est réalisé à l'aide d'au moins un ressort de rappel. Cela implique de rester alimenté électriquement pendant toute la période d'ouverture de l'obturateur 20.

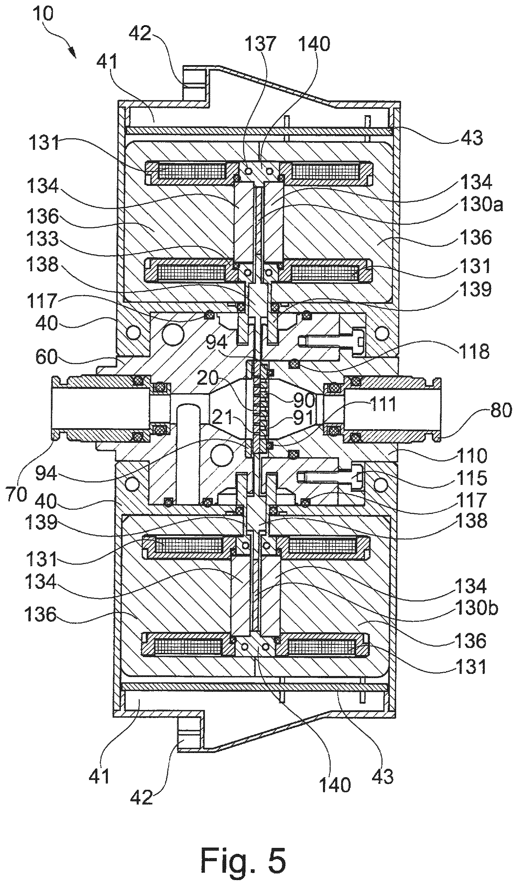

Une alternative à ce rappel par ressort, permettant une amélioration du temps de réponse et une baisse de la consommation électrique, repose sur l'utilisation de deux actionneurs électromagnétiques à élément moteur réalisé en matériau à mémoire de forme, placés en opposition, comme illustré à la figure 5.

La figure 5 représente une électrovanne 10 équipée d'un obturateur 20 à plaque à fentes et d'un siège 90 à plaque à fentes, identiques à ceux des figures 1 à 4, et de deux actionneurs électromagnétiques à élément moteur en matériau à mémoire de forme magnétique, chacun identique à celui décrit en référence à la figure 4.

Lorsque l'actionneur du haut est excité et que celui du bas ne l'est pas, l'obturateur 20 est déplacé par le barreau 130a du haut vers le bas, en position ouverte. Les fentes 21 se superposent aux fentes 91 et l'air peut circuler à travers l'électrovanne entre l'entrée 70 et la sortie 80.

Lorsque l'actionneur du bas est excité et que celui du haut ne l'est pas, l'obturateur 20 est déplacé par le barreau 130b du bas vers le haut, en position fermée. Les fentes 21 sont obturées par le siège 90 et l'électrovanne 10 n'est pas passante.

De par les efforts de frottement entre l'obturateur et le siège, ainsi que l'absence de ressort de rappel, l'obturateur 20 peut conserver la position dans laquelle il a été amené lorsqu'aucun des deux actionneurs n'est excité.

L'association des deux actionneurs à mémoire de forme, placés en opposition, permet également de piloter l'obturateur en mode proportionnel, en faisant varier le courant d'alimentation.

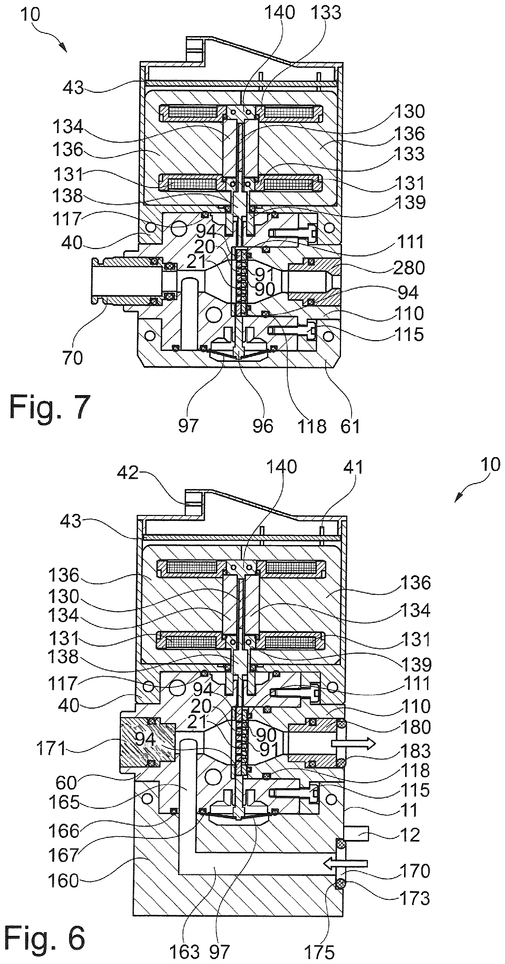

Dans les exemples des figures 1 à 5, le raccordement pneumatique peut être réalisé par l'utilisation de raccords rapides pour tubes souples. Cependant, afin de simplifier le montage d'une pluralité d'électrovannes sur une embase commune, une variante de raccordement pneumatique à plan de pose, pour les électrovannes à simple actionneur électromagnétique, peut être proposée, comme illustrée sur la figure 6.

L'électrovanne 10 est équipée d'un obturateur 20 à plaque à fentes et d'un siège 90 identique à ceux des exemples des figures 1 à 5. L'actionneur électromagnétique est adapté au montage sur une embase. A cet effet, l'électrovanne 10 comporte un socle 160 qui remplace le capot inférieur 61 des exemples précédemment décrits.

Le socle 160 comporte un canal 163 qui communique avec une entrée 170 débouchant sur une face 11 de l'électrovanne 10. Des vis 12 peuvent permettre de plaquer la face 11 contre le plan de pose défini par une plaque porteuse de raccords, non représentée. Les électrovannes pourront se raccorder sur une embase percée.

Le canal 163 communique avec un canal 165 réalisé dans le corps pneumatique 60. Un joint torique 166, reçu dans une gorge 167 réalisée dans le corps 60, assure l'étanchéité du raccordement entre les canaux 163 et 165.

Le raccord 70 des exemples précédents a été remplacé par un bouchon 171. Le raccord 80 a été remplacé par une pièce 180 sur laquelle appuie un joint torique 183. Un joint 173 repose sur un lamage 175, dans le fond duquel débouche le canal 163. Les joints 173 et 183 dépassent légèrement de la face 11, ce qui leur permet de s'appliquer de façon étanche sur la plaque contre laquelle l'électrovanne est fixée.

Pour des applications spécifiques, hors celle de la figure 6, une buse 280 peut être montée à la place du raccord rapide de sortie, directement en sortie de l'électrovanne, comme illustré à la figure 7.

De préférence, les fentes 21 et 91 sont étroites de façon à obtenir un temps de réponse faible.

La largeur *w* d'une fente 21 ou 91 est ainsi avantageusement inférieure à 1 mm, et mieux comprise entre 0,1 et 0,3 mm, par exemple égale à 0,2 mm. Une telle valeur constitue un bon compromis entre finesse et résistance mécanique. Les fentes 21 et 91 sont par exemple réalisées par usinage laser.

L'écartement *s* entre les fentes 21 et 91 est de préférence supérieur à 1 fois la largeur *w mieux 2 fois supérieur:* il est de 0,5 mm par exemple.

Les fentes 21 et 91 peuvent être terminées par des arrondis.

Dans la variante illustrée à la figure 9, les fentes 21 et 91 sont remplacées par des fentes respectives radiales 121 et 191. Dans ce cas, les fentes 121 et 191 sont déplacées par un mouvement relatif de rotation entre les positions ouvertes et fermées.

L'invention n'est pas limitée aux exemples qui viennent d'être décrits. Par exemple, on peut modifier la forme des orifices de l'obturateur, par exemple le nombre de fentes et leur disposition.

Le cas échéant, une partie du noyau 30 ou des poussoirs 96 et 138 peut être réalisée dans le même matériau que l'obturateur 20.

L'expression "comportant un" doit se comprendre comme étant synonyme de "comprenant au moins un".

## Revendications

1. Electrovanne (10), ayant une entrée et une sortie de fluide, notamment d'air comprimé, comportant :
- un actionneur,
- un obturateur (20) entraîné par l'actionneur, mobile entre une position fermée s'opposant à un passage du fluide entre l'entrée et la sortie, et une position ouverte permettant le passage du fluide entre l'entrée et la sortie, l'obturateur (20) présentant au moins un orifice (21) et se déplaçant au contact d'un siège (90) présentant un orifice correspondant (91), ce dernier se superposant au moins partiellement à l'orifice (21) de l'obturateur (20) quand celui-ci est en position ouverte, et le siège (90) obturant l'orifice (21) de l'obturateur (20) quand celui-ci est en position fermée, électrovanne **caractérisée par le fait que** la course de l'obturateur entre les positions ouverte et fermée est inférieure à 1 mm, le corps (60) de l'électrovanne étant parcouru par un canal interne (165) communiquant avec l'entrée de fluide, le canal interne (165) étant obturé par un capot inférieur (61) ou le canal interne (165) communiquant avec un canal (163) réalisé dans une embase (160), et débouchant sur l'entrée (170) de fluide.

2. Electrovanne selon la revendication 1, l'orifice (21) de l'obturateur (20) étant sous forme de fente, de préférence orientée perpendiculairement à la direction de déplacement de l'obturateur (20).

3. Electrovanne selon la revendication 1 ou 2, l'obturateur (20) comportant plusieurs orifices (21) sous forme de fentes et le siège (90) comportant des fentes correspondantes (91).

4. Electrovanne selon l'une quelconque des revendications 1 à 3, l'obturateur (20) et/ou le siège (90) étant en matériau céramique.

5. Electrovanne selon l'une quelconque des revendications 1 à 4, l'obturateur (20) et le siège (90) étant chacun sous forme de plaque.

6. Electrovanne selon l'une quelconque des revendications 1 à 5, l'actionneur étant à noyau mobile tirant (30) ou poussant (30).

7. Electrovanne selon l'une quelconque des revendications précédentes, la course de l'obturateur étant inférieure ou égale à 0,5 mm.

8. Electrovanne selon l'une quelconque des revendications 1 à 7, l'actionneur étant à élément moteur constitué par un matériau à mémoire de forme magnétique, notamment sous forme de barreau (130) s'allongeant lorsque traversé par un champ magnétique.

9. Electrovanne selon l'une quelconque des revendications 1 à 8, comportant deux actionneurs en opposition, pour agir sur l'obturateur (20), notamment deux actionneurs comportant chacun un élément moteur constitué par un matériau à mémoire de forme magnétique, pouvant être alimentés par un courant variable de façon à piloter l'électrovanne en mode proportionnel.

10. Electrovanne selon l'une quelconque des revendications 1 à 9, l'entrée et la sortie étant définies par des orifices débouchant sur une même face (11) de l'électrovanne, les orifices d'entrée et de sortie étant équipés de joints respectifs (173, 183).

11. Electrovanne selon l'une quelconque des revendications précédentes, le siège (90) étant monté, avec interposition d'un joint (111), contre un insert (110) rapporté dans le corps (60), notamment maintenu par des vis (115) sur celui-ci

12. Electrovanne selon l'une quelconque des revendications précédentes, comportant un ressort (97) de rappel de l'obturateur, disposé entre le capot inférieur (61) et le corps (60).

13. Electrovanne selon l'une quelconque des revendications précédentes, le ou chaque orifice (21) ou (91) étant une fente de largeur (w) inférieure à 1 mm, mieux inférieure ou égale à 0,5 mm.

14. Utilisation d'une électrovanne (10) telle que définie dans l'une quelconque des revendications précédentes pour commuter un flux d'air comprimé, l'électrovanne comportant notamment deux actionneurs en opposition, comportant chacun un élément moteur constitué par un matériau à mémoire de forme magnétique, alimentés par un courant variable de façon à piloter l'obturateur en mode proportionnel.

15. Procédé pour générer un flux de fluide pulsé en utilisant une électrovanne telle que définie dans l'une quelconque des revendications 1 à 13, actionnée à une fréquence supérieure ou égale à 100 Hz, mieux supérieure ou égale à 500 Hz, notamment comprise entre 0 et 1500 Hz.

## Patentansprüche

1. Elektromagnetisches Ventil (10), welches einen Einlass und einen Auslass für ein Fluid aufweist, insbesondere für Druckluft, umfassend:
- einen Aktuator,
- einen Verschluss (20), der durch den Aktuator angetrieben ist und zwischen einer geschlossenen Position, in welcher er den Durchfluss des Fluids vom Einlass zum Auslass verhindert, und einer offenen Position, in welcher er den Durchfluss von Fluid vom Einlass zum Auslass erlaubt, bewegbar ist, wobei der Verschluss (20) zumindest eine Öffnung (21) hat und sich in Kontakt mit ein Sitz (90), der eine entsprechende Öffnung (91) hat, bewegt, wobei letztere zumindest teilweise mit der Öffnung (21) des Verschlusses (20) überlappt, wenn letzterer sich in der offenen Position befindet, und der Sitz (90) die Öffnung (21) des Verschlusses (20) verschließt, wenn dieser sich in der geschlossenen Position befindet,
wobei das elektromagnetische Ventil **dadurch gekennzeichnet ist, dass** der Hub des Verschlusses zwischen der offenen und der geschlossenen Positionen weniger als 1 mm beträgt, der Körper (60) des elektromagnetischen Ventils einen durchgehenden internen Kanal (165) umfasst, welcher mit dem Einlass des Fluids verbunden ist, wobei der interne Kanal (165) durch eine untere Abdeckung verschlossen ist (61) oder der interne Kanal (165) mit einem Kanal in Verbindung steht (163), der in einer Basis (160) ausgebildet ist und der in den Einlass (170) des Fluids mündet.

2. Elektromagnetisches Ventil nach Anspruch 1, wobei die Öffnung (21) des Verschlusses (20) als Schlitz ausgestaltet ist, vorzugsweise senkrecht zur Bewegungsrichtung der Verschlusses (20).

3. Elektromagnetisches Ventil nach Anspruch 1 oder Anspruch 2, wobei der Verschluss (20) eine Vielzahl von Öffnungen (21) in Form von Schlitzen umfasst und der Sitz (90) entsprechende Schlitze (91) aufweist.

4. Elektromagnetisches Ventil nach einem der Ansprüche 1 bis 3, wobei der Verschluss (20) und / oder der Sitz (90) aus keramischem Material besteht.

5. Elektromagnetisches Ventil nach einem der Ansprüche 1 bis 4, wobei der Verschluss (20) und der Sitz (90) jeweils plattenförmig sind.

6. Elektromagnetisches Ventil nach einem der Ansprüche 1 bis 5, wobei der Aktuator mit bewegbarem Kern zum Ziehen (30) oder Schieben (30) ausgestaltet ist.

7. Elektromagnetisches Ventil nach einem der vorhergehenden Ansprüche, wobei der Hub des Verschlusses kleiner oder gleich 0,5 mm ist.

8. Elektromagnetisches Ventil nach einem der Ansprüche 1 bis 7, wobei der Aktuator mit einem Antriebselement ausgestattet ist, bestehend aus einem magnetischen Formgedächtnismaterial, insbesondere in der Form eines Stabs (130), der sich verlängert, wenn er von einem Magnetfeld durchsetzt wird.

9. Elektromagnetisches Ventil nach einem der Ansprüche 1 bis 8 umfassend zwei einander gegenüber liegende Aktuatoren, die auf den Verschluss (20) einwirken, insbesondere zwei Aktuatoren mit jeweils einem Antriebselement, welches aus einem magnetischen Formgedächtnismaterial besteht, die von einem ein variablen Strom gespeist werden können, um das elektromagnetische Ventil in einem Proportional-Modus zu steuern.

10. Elektromagnetisches Ventil nach einem der Ansprüche 1 bis 9, wobei der Einlass und der Auslass von Öffnungen gebildet werden, die in die selbe Fläche (11) des elektromagnetischen Ventils münden, wobei der Einlass und Auslass mit entsprechenden Anschlüssen (173, 183) ausgestattet sind.

11. Elektromagnetisches Ventil nach einem der vorhergehenden Ansprüche, wobei der Sitz (90) mit einer zwischengelegten Dichtung (111) in einem Einsatz (110) montiert ist, der an einem Körper (60) befestigt ist, insbesondere mit Schrauben (115) darauf befestigt ist.

12. Elektromagnetisches Ventil nach einem der vorhergehenden Ansprüche, umfassend eine Rückstellfeder (97) des Verschlusses, die zwischen der unteren Abdeckung (61) und dem Körper (60) angeordnet ist.

13. Elektromagnetisches Ventil nach einem der vorhergehenden Ansprüche, wobei eine oder beide Öffnungen (21) oder (91) ein Schlitz mit einer Breite (w) von weniger als 1 mm sind, vorzugsweise weniger als oder gleich 0,5 mm.

14. Verwendung eines elektromagnetischen Ventils (10) nach einem der vorhergehenden Ansprüche zum Übertragen eines Druckluftstroms, wobei das elektromagnetische Ventil insbesondere zwei gegenüberliegende Betätigungselemente umfasst, die jeweils ein Antriebselement aus einem magnetischen Formgedächtnismaterial umfassen, die von einem variablen Strom versorgt werden, um den Verschluss in einem Proportionalmodus zu steuern.

15. Verfahren zur Erzeugung eines gepulsten Fluidstroms unter Verwendung eines Ventils nach einem der Ansprüche 1 bis 13, welches bei einer Frequenz betrieben wird, die größer als oder gleich 100 Hz, vorzugsweise größer als oder gleich 500 Hz ist, insbesondere zwischen 0 und 1500 Hz liegt.

## Claims

1. Solenoid valve (10) having an inlet and an outlet for fluid, in particular compressed air, comprising:
- an actuator and
- a shut-off member (20) driven by the actuator and movable between a closed position preventing the passage of fluid between the inlet and the outlet and an open position allowing for the passage of fluid between the inlet and the outlet,
the shut-off member (20) having at least one orifice (21)
and being displaced upon contact with a seat (90) having a corresponding orifice (91), said orifice being at least partially superposed upon the orifice (21) of the shut-off member (20) when the latter is in the open position and the seat (90) shutting off the orifice (21) of the shut-off member (20) when the latter is in the closed position,
said solenoid valve being **characterised in that**
the stroke of the shut-off member between the open and closed positions is less than 1 mm, the body (60) of the solenoid valve being traversed by an internal channel (165) communicating with the fluid inlet, the internal channel (165) being shut off by a lower cover (61) or the internal channel (165) communicating with a channel (163) formed in a base (160) and opening on to the fluid inlet (170).

2. Solenoid valve according to claim 1, the orifice (21) of the shut-off member (20) being in the form of a slot, preferably oriented perpendicularly to the direction of displacement of the shut-off member (20).

3. Solenoid valve according to claim 1 or claim 2, the shut-off member (20) comprising several orifices (21) in the form of slots and the seat (90) comprising corresponding slots (91).

4. Solenoid valve according to any one of claims 1 to 3, the shut-off member (20) and/or the seat (90) being made of ceramic material.

5. Solenoid valve according to any one of claims 1 to 4, the shut-off member (20) and the seat (90) each being in the form of a plate.

6. Solenoid valve according to any one of claims 1 to 5, the actuator having a pull-type or push-type movable core (30).

7. Solenoid valve according to any one of the preceding claims, the stroke of the shut-off member being less than or equal to 0.5 mm.

8. Solenoid valve according to any one of claims 1 to 7, the actuator having a motor element formed by a magnetic shape memory material, in particular in the form of a bar (130) becoming elongated when traversed by a magnetic field.

9. Solenoid valve according to any one of claims 1 to 8, comprising two opposing actuators to act on the shut-off member (20), in particular two actuators each comprising a motor element formed by a magnetic shape memory material that can be supplied by a variable current so as to control the solenoid valve in a proportional mode.

10. Solenoid valve according to any one of claims 1 to 9, the inlet and the outlet being defined by orifices opening on to the same face (11) of the solenoid valve, the inlet and outlet orifices being provided with respective seals (173, 183).

11. Solenoid valve according to any one of the preceding claims, the seat (90) being mounted with the interposition of a seal (111) against an insert (110) fitted in the body (60), in particular held thereon by screws (115).

12. Solenoid valve according to any one of the preceding claims, comprising a return spring (97) for the shut-off member, disposed between the lower cover (61) and the body (60).

13. Solenoid valve according to any one of the preceding claims, the or each orifice (21) or (91) being a slot having a width (w) of less than 1 mm, preferably less than or equal to 0.5 mm.

14. Use of a solenoid valve (10) as defined in any one of the preceding claims to switch a compressed-air flow, the solenoid valve comprising, in particular, two opposing actuators each comprising a motor element formed by a magnetic shape memory material and supplied by a variable current so as to control the shut-off member in a proportional mode.

15. Process for generating a pulsed fluid flow using a solenoid valve as defined in any one of claims 1 to 13, actuated at a frequency greater than or equal to 100 Hz, preferably greater than or equal to 500 Hz, in particular between 0 and 1500 Hz.
